# EUROPEAN PATENT SPECIFICATION

(11) **EP 2 071 476 B1**
(45) Date of publication and mention of the grant of the patent: **30.04.2014**
(21) Application number: 08011849.0
(22) Date of filing: 01.07.2008
(51) Int. Cl.: G06F 17/30

(54) **Search device, search method and search program**
Suchvorrichtung, Suchverfahren und Suchprogramm
Dispositif de recherche, procédé de recherche et programme de recherche

(30) Priority: 12.12.2007 JP 2007320550
(43) Date of publication of application: 17.06.2009
(73) Proprietor: MITSUBISHI ELECTRIC CORPORATION, Chiyoda-ku Tokyo 100-8310 (JP)
(72) Inventor: Ujiie, Junya c/o Mitsubishi Electric Corporation, Tokyo 100-8310 (JP); Mizuguchi, Takehisa c/o Mitsubishi Electric Corporation, Tokyo 100-8310 (JP)
(74) Representative: Pfenning, Meinig & Partner GbR

(56) References cited:
- EP-A- 1 343 132
- US-A- 5 666 526
- US-A1- 2001 005 850
- US-B1- 6 598 041

## Description

### BACKGROUND OF THE INVENTION

### Field of the Invention

The present invention relates to a technique, for example, to search for and retrieve information from a database.

### Background Art

When a plurality of records that meet a search condition exist in data management using a Relational Database Management System (RDBMS), each record is aligned according to a prescribed rule (a storing order into the RDBMS, a sort condition of search). Users of the RDBMS sequentially retrieve and use records. Meanwhile, when users do not retrieve records sequentially, but retrieve records at an arbitrary location, desired records can be retrieved by controlling the RDBMS using a cursor.

There are following techniques as techniques for speeding up a search processing using an RDBMS.

In JP2-236668, when a data buffer within a calculation device becomes full, prefetch data is stored in a cache memory inside a data processing device. Then, the prefetch data stored in the cache memory is transferred to the calculation device afterward to enable a faster calculation processing.

In JP2003-150419, a storage device retrieves information of structure information, a query to be executed, and execution priority information, etc. of an RDBMS. Then, data cache control is performed in the storage device using the retrieved information to improve data access performance.

However in either technique, it is impossible for users of the RDBMS to know the number of records that meet a condition (the number of hits) during the search execution unless they have retrieved the number of hits with the same condition beforehand. That is, the users of the RDBMS cannot know the number of hits until the RDBMS reads all the hit records and completes search, or a cursor reaches the bottom of a search result by controlling the cursor.

Recently, the amount and types of data to be processed by an embedded device, etc. have increased, and data management using an RDBMS has been also performed in the embedded device, etc. The embedded device has a display device (display unit) small in size, which limits the number of records extracted from the RDBMS displayed as a search result. Therefore, when there is a large number of hits, displayed records are shifted by user operation. For example, in a case of an embedded device having arrow keys, pressing a right arrow key allows the display device to "display next page", and pressing a left arrow key allows the display device to "display previous page."
In a program (hereinafter referred to as "display program") for displaying records on a display device by manipulating an RDBMS that runs on an embedded device, processing instructions such as "display next page" and "display previous page" are converted into specific processing instructions using numbers of records to be actually displayed, such as "display X to Y number records from the top of the search result," etc. That is, when a display program displaying 5 items at a time is currently displaying the sixth to tenth records from the top, the processing instruction "display next page" is converted into a processing instruction "display the 11^{th} to 15^{th} records from the top of the search result," and the processing instruction "display previous page" is converted into a processing instruction "display the first to fifth records from the top of the search result." Then, according to the instructions after the conversion, a retrieval request of a search result is issued to the RDBMS.

It is here considered an operation of displaying records located at the bottom of the search result when a user presses a left arrow key (issues the processing instruction "display previous page") at a time of initial representation of the search result, namely, at a time the display program is displaying the first to fifth records from the top of the search result.

The display program issues a request to retrieve records to the RDBMS using record numbers of the records to be actually displayed as described above. The number of records (hereinafter referred to as the number of hits) included in the search result is required to convert the processing instruction "display previous page" into the record numbers. For example, when it is given that the number of hits is 500, the processing instruction "display previous page" can be converted into the processing instruction "display the 496^{th} to 500^{th} records from the top of the search result."

Thus, the display program needs to have retrieved the number of hits as well as the records to be displayed in order to execute the processing of "display next page" and "display previous page." To resolve the problem, it is only necessary to issue before issuing a search request for retrieving records to the RDBMS a search request for retrieving only the number of hits using the same condition as the search request. However, this leads to performing searches on the same condition twice, so that it is inefficient and it takes time to display the search result.

Further, when the RDBMS receives the search request from the display program, the RDBMS searches for records that meet a search condition in databases, and creates a search result. The RDBMS generally creates the search result sequentially from the top of the search result. Considering displaying the bottom of the search result as described above, there is a necessity to have already retrieved "the first to 495^{th} records from the top of the search result" so as to retrieve "the 496^{th} to 500^{th} records from the top of the search result" from the RDBMS. Therefore, in order for the display program to display the record located at the bottom of the search result, the RDBMS needs to have completed creating the search result. Thus, it takes time to display the search result.

US-B1-6 598 041 discloses a search device for searching for data in a database, which comprises a search information input unit to Input search information Indicating a retrieval target item, a search target table and a search condition. A record number search unit searches for a record that meets the search condition indicated by the search information from the search target table indicated by the search information input by the search information input unit, wherein the search target table is a table in the database, and retrieves a record number that uniquely identifies a record in the search target table from the record searched while ranking the record number. A rank information input unit inputs rank information indicating a prescribed rank, and a target item retrieval unit retrieves data of the retrieval target item of a record specified by a record number at a rank indicated by the rank information input by the rank information input unit, wherein the record number Is retrieved by the record number search unit.

### SUMMARY OF THE INVENTION

The present invention aims to allow a program (the above-mentioned display program, etc.) using records retrieved from an RDBMS that runs on an embedded device, etc. to retrieve the number of hits and records located at an arbitrary location of a search result at a high speed, for example. In other words, the present invention aims to allow an embedded device, etc. to retrieve the number of hits and records located at an arbitrary location of a search result at a high speed, for example.

According to the invention, a search device with the features of claim 1, a search method with the features of claim 7 and a search program with the features of claim 8 are provided.

Further embodiments of the invention are defined by the dependent claims.

### BRIEF DESCRIPTION OF THE DRAWINGS

A complete appreciation of the present invention and many of the attendant advantages thereof will be readily obtained as the same becomes better understood by reference to the following detailed description when considered in connection with the accompanying drawings, wherein:
Fig. 1 is a functional block diagram of a search system including a search device 100 according to the first embodiment;
Fig. 2 describes one example of a structure of a search setting information 200;
Fig. 3 describes one example of a structure of a search result 300;
Fig. 4 is a flowchart describing an operation of a request control unit 101 having received a search start request from an application 110;
Fig. 5 is a flowchart describing the number of hits retrieval processing;
Fig. 6 is a flowchart describing a column value retrieval processing;
Fig. 7 is a flowchart describing an interrupt processing; and
Fig. 8 describes one example of a hardware configuration of the search device 100.

### DESCRIPTION OF THE PREFERRED EMBODIMENT

### Embodiment 1.

In the present embodiment, explanation is provided of the search device 100 that enables retrieving records located at an arbitrary location of a search result at a high speed.

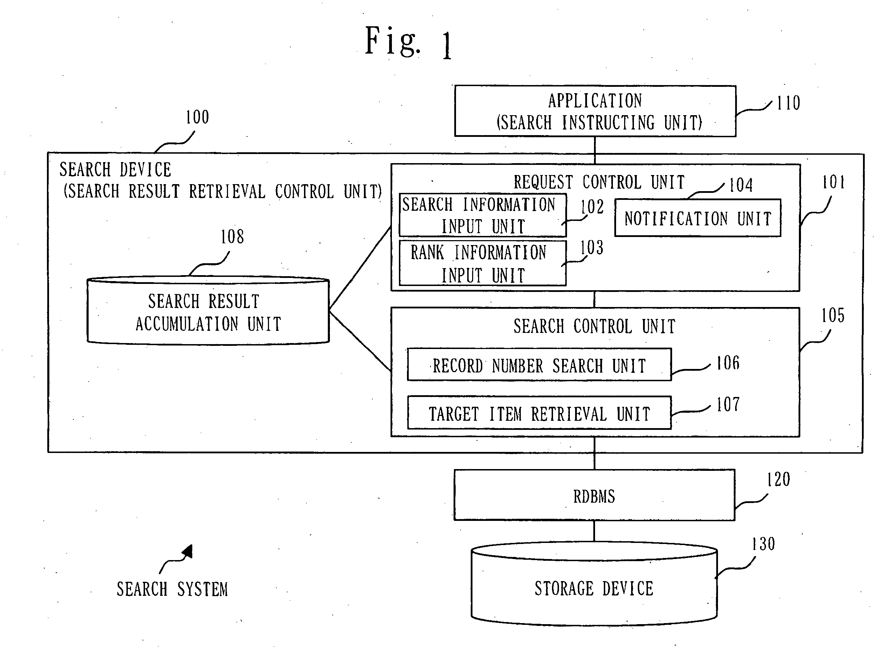

Fig. 1 is a functional block diagram of the search system including the search device 100 according to the present embodiment.

The search system includes the search device 100 (search result retrieval control unit), the application 110 (one example of a search instructing unit), an RDBMS 120 and a storage device 130.

The search device 100 is a device that enables retrieving records located at an arbitrary location of the search result at a high speed, details of which are described below.

The application 110 is a program using the search device 100. The application 110 retrieves and displays data stored in the storage device 130, and provides the data to other devices or programs.

The RDBMS 120 is a program to provide a function for accessing a database accumulated in the storage device 130.

The storage device 130 is a nonvolatile storage device such as a Hard Disk Drive (HDD), a Solid State Disk (SSD), etc. The storage device 130 accumulates and stores collections of data (database). Generally, a database can include a plurality of tables, and a table can include a plurality of records.

Thus, the search device 100 retrieves information of the records stored in the storage device 130 via the RDBMS 120 according to a search instruction from the application 110. Then, the search device 100 transmits the information retrieved through search to the application 110.

Here, it is acceptable that the search device 100, the application 110, the RDBMS 120 and the storage device 130 are placed in one device, or provided separately as individual devices. That is, it is acceptable whether the search device 100, the application 110, the RDBMS 120 and the storage device 130 are included in one embedded device, or only the application 110 is included in an embedded device while the search device 100, the RDBMS 120 and the storage device 130 are included in the other devices.

Further, in the following explanation, a processing device is, for example, a CPU 911 as described below, a communication device is, for example, a communication board 915 or a bus 912 as described below, and an input device is, for example, the communication device 915 or a keyboard 902 as described below.

Next, an explanation of the search device 100 is provided. The search device 100 includes a request control unit 101, a search control unit 105 and a search result accumulation unit 108.

The request control unit 101 is a function to receive requests from the application 110, and includes a search information input unit 102, a rank information input unit 103 and a notification unit 104.

The search information input unit 102 receives a search start request (one example of search information) from the application 110 located outside of the search device 100 via the communication device or the input device, and transmits the search start request to the search control unit 105 via the communication device or the input device.

The rank information input unit 103 receives a search result retrieval request (one example of rank information) from the application 110 via the communication device or the input device, and transmits the search result retrieval request to the search control unit 105 via the communication device or the input device.

When the notification unit 104 receives a notification (response) corresponding to the search start request and the search result retrieval request from the search control unit 105 via the communication device or the input device, the notification unit 104 transmits the notification (response) corresponding to the search start request and the search result retrieval request to the application 110 via the communication device or the input device.

The search control unit 105 is a function to perform a search processing, and includes a record number search unit 106 and a target item retrieval unit 107.

When the record number search unit 106 receives the search start request from the request control unit 101, the record number search unit 106 searches for and retrieves record numbers of records that meet a search condition using the RDBMS 120 by the processing device, and counts up the number of the records that meet the search condition (hereinafter referred to as the number of hits) by the processing device.

The target item retrieval unit 107 retrieves the records by specifying the record numbers retrieved as a search condition using the RDBMS by the processing device, and stores the retrieved records in the search result accumulation unit 108.

The record number search unit 106 and the target item retrieval unit 107 notify completion of each processing to the notification unit 104 via the communication device or the input device after completing each process.

The search result accumulation unit 108 is, for example, a volatile storage device such as a Random Access Memory (RAM), which stores records, etc. retrieved by the search control unit 105 by using the RDBMS 120. The search result accumulation unit 108 may be a nonvolatile storage device.

Next, an explanation of a flow of basic operations of the search device 100 is provided (simple description of operations).
(1) A search start request indicating a retrieval target item, a search target table and a search condition is input from the application 110, and is received by the search information input unit 102 in the request control unit 101.
(2) Next, the search information input unit 102 transmits the search start request to the record number search unit 106 in the search control unit 105.
(3) Next, the record number search unit 106 searches for records that meet a search condition of the search start request in the search target table, retrieves record numbers which uniquely specify records of the search target table from the searched records while ranking the record numbers, and stores the record numbers in the search result accumulation unit 108. Further, the record number search unit 106 additionally counts up the number of hits.
(4) Next, the target item retrieval unit 107 in the search control unit 105 specify the record numbers retrieved by the record number search unit 106 as a search condition, retrieves and stores in the search result accumulation unit 108 a retrieval target item of the search target table in the order ranked by the record number search unit 106.
(5) A search result retrieval request indicating data of what number records are to be retrieved is input by the application 110, and is received by the rank information input unit 103 in the request control unit 101.
(6) The rank information input unit 103 transmits the search result retrieval request to the target item retrieval unit 107.
(7) The target item retrieval unit 107 retrieves data of appropriate records from the search result accumulation unit 108 by the processing device, and stores the data in the search result accumulation unit 108.
(8) The notification unit 104 transmits the data stored in the search result accumulation unit 108 by the target item retrieval unit 107 to the application 110.

An explanation is provided of search setting information 200 to be used for passing a search condition, etc. and a search result 300 to be used for passing a search result.

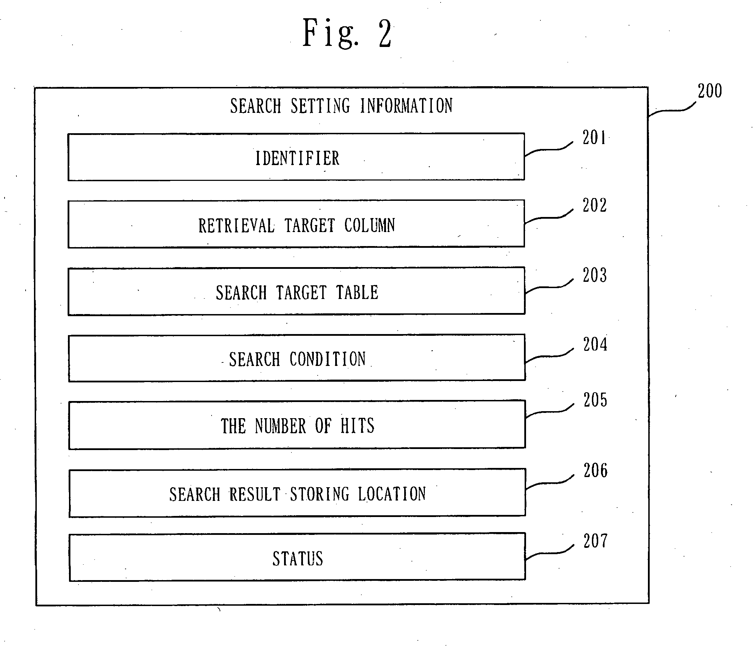

Fig. 2 is a diagram describing a structure of the search setting information 200.

The search setting information 200 includes an identifier 201, a retrieval target column 202 (retrieval target item), a search target table 203, a search condition 204, the number of hits 205, a search result storage location 206 and a status 207.

The identifier 201 is identification information whereby a search start request can be uniquely identified.

The retrieval target column 202 lists names of one or more columns storing data which is desired to be retrieved.

The search target table 203 is a table name of a table to be searched among tables of the database stored in the storage device 130.

The search condition 204 is information indicating a condition to narrow data. The search condition 204 is, for example, information indicated in WHERE clause if represented in Structure Query Language (SQL).

The number of hits 205 is the number of records that meet the search condition 204, and is a value counted up by the record number search unit 106.

The search result storage location 206 is a location (address) of the search result 300 created in the search result accumulation unit 108 by the search item retrieval unit 107.

The status 207 is a progress status of a search processing.

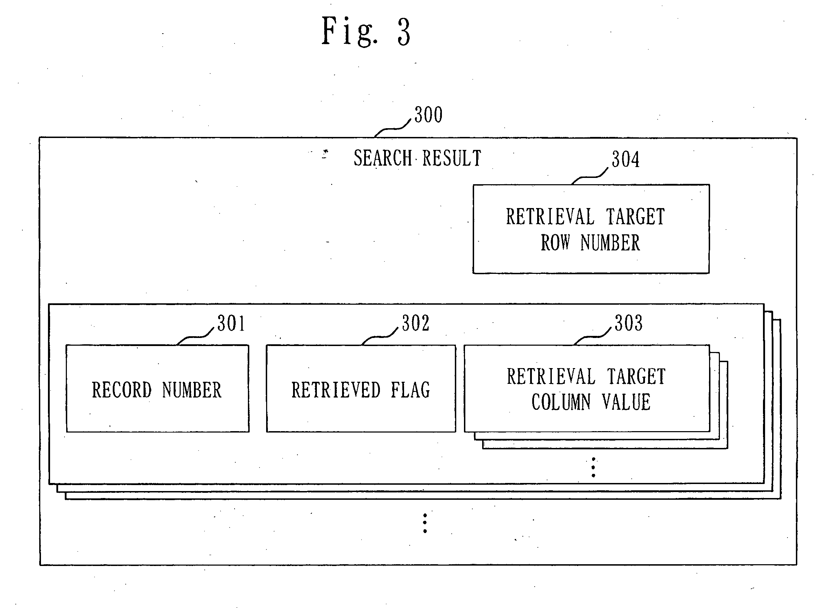

Fig. 3 is a diagram describing a structure of the search result 300.

The search result 300 includes a record number 301, a retrieved flag 302, a retrieval target column value 303 and a retrieval target row number 304. Here, the record number 301, the retrieved flag 302 and the retrieval target column value 303 each exists in the search result 300 as many as the number of records that meet a search condition (the number of hits). That is, one or more "sets" exist in the search result 300, where a set consists of a record number 301, a retrieved flag 302 and a retrieval target column value 303. Thus, the search result 300 includes one or more sets consisting of record numbers 301, retrieved flags 302 and retrieval target column values 303, and one retrieval target row number 304.

The record number 301 is a number that uniquely specifies a record in a table accessed by the RDBMS 120.

The retrieved flag 302 is information (flag) indicating whether or not data in a retrieval target column has been retrieved from the record indicated by the record number 301. That is, the retrieved flag 302 is information indicating whether or not a value retrieved from the RDBMS 120 is stored in the retrieval target column value 303 as will hereinafter be described.

The retrieval target column value 303 is a value of a column indicated by the retrieval target column 202 among columns of the records in the table accessed by the RDBMS 120. When the retrieval target column 202 indicates a plurality of column names, a plurality of values are stored in the retrieval target column value 303.

The retrieval target row number 304 is a row number of a record that is being retrieved by the target column retrieval unit 107. That is, the retrieval target row number 304 is rank information indicating what number record from the top of records that meet a search condition the target item retrieval unit 107 is retrieving.

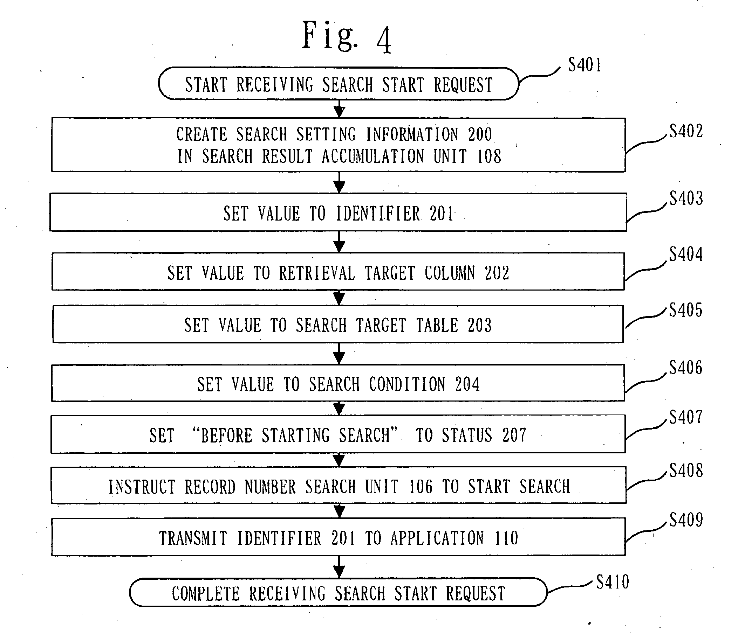

An explanation of operations of the search device 100 according to the present embodiment is provided based on Fig. 1 to Fig. 3 described above, and Fig. 4 to Fig. 7 as will hereinafter be described.

An operation of displaying a search result by the application 110 is not described herein since any method can be employed in such an operation. Further, although it is necessary to open a database to be searched before performing the operations of the search device 100 as will hereinafter be described, an explanation of the process is omitted in this explanation, and it is assumed here that the database is made available for a search processing.

First, an explanation is provided of an operation (corresponds to (1) and (2) of the above-mentioned simple description of operations) of the request control unit 101 having received a search start request from the application 110, based on Fig. 1, Fig. 2 and Fig. 4. Fig. 4 is a flowchart describing an operation of the request control unit 101 having received the search start request from the application 110.

(S401) The search information input unit 102 in the request control unit 101 receives a search start request from the application 110 via the communication device or the input device.

(S402) The search information input unit 102 creates search setting information 200 by the processing device, and stores the search setting information 200 in the search result accumulation unit 108.

(S403) The search information input unit 102 stores a prescribed value in the identifier 201. Here, the prescribed value may be any value that can uniquely specify the search setting information 200. That is, when a plurality of search setting information 200 exist in the search result accumulation unit 108, a value that does not duplicate the identifiers 201 of the plurality of search setting information 200 is stored.

(S404) - (S406) The search information input unit 102 stores information included in the search start request received from the application 110 in the retrieval target column 202, the search target table 203, and the search condition 204 in the search setting information 200 created in the search result accumulation unit 108. For example, when a search start request received from the application 110 is an SQL statement "SELECT Name, Genre, Address FROM ShopData WHERE Genre = 'Japanese Food';", "Name, Genre, Address" is stored in the retrieval target column 202, "ShopData" is stored in the search target table 203, and "Genre = 'Japanese Food"' is stored in the search condition 204. Here, it is assumed that a specific procedure for storing information received from the application 110 in the search setting information 200 is predetermined between the search device 100 and the application 110.

(S407) The search information input unit 102 stores a prescribed value indicating "before starting search" in the status 207 in the search setting information 200.

(S408) The search information input unit 102 instructs the record number search unit 106 to start search. That is, by notifying the search setting information 200 to the record number search unit 106, the search information input unit 102 notifies the search start request to the record number search unit 106. It is also acceptable that the search information input unit 102 notifies the identifier 201, for example, to the record number search unit 106. This enables the record number search unit 106 to retrieve the search start request from the search result accumulation unit 108.

(S409) The notification unit 104 in the request control unit 101 transmits the identifier 201 to the application 110 without waiting for a response to the instruction by the search information input unit 102 in (S408) from the record number search unit 106. Here, "without waiting for a response" indicates that the application 110 and the record number search unit 106 are operated by different processes, or threads, and the instruction in (S408) is an asynchronous instruction. The identifier 201 is used when the application 110 receives a search result from the search device 100.

(S410) The request control unit 101 completes the operation at the time of receiving the search start request from the application 110.

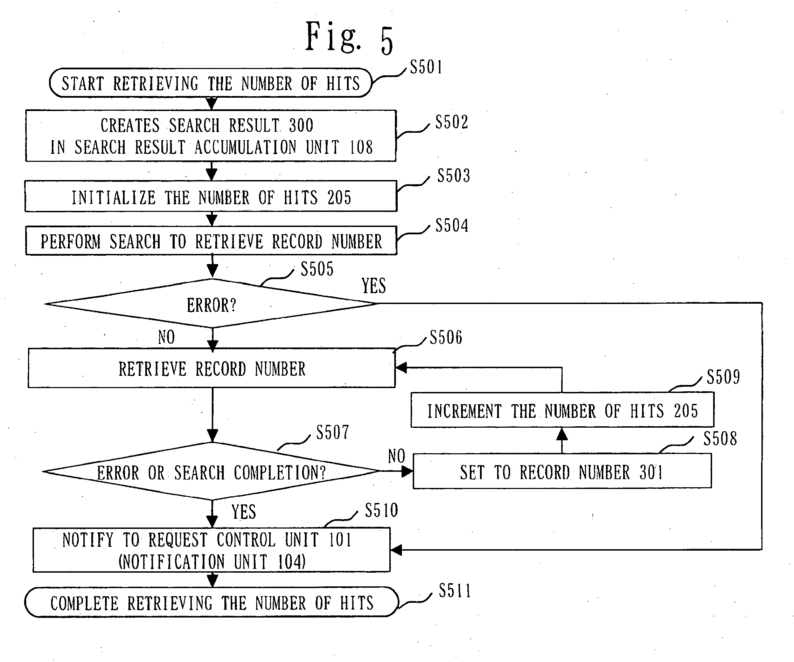

Next, an explanation is provided of the number of hits retrieval processing (corresponds to (3) of the above-mentioned simple description of operations) as an operation of the search control unit 105 having received a search start instruction from the search information input unit 102 based on Fig. 1, Fig. 2, Fig. 3 and Fig. 5. Fig. 5 is a flowchart describing the number of hits retrieval processing to count up the number of hits by the record number search unit 106 having received the search start request from the request control unit 101.

(S501) When the record number search unit 106 in the search control unit 105 receives the search start instruction from the search information input unit 102, the record number search unit 106 creates a search result 300 in the search result accumulation unit 108.

(S502) The record number search unit 106 sets to (stores in) the search result storage location 206 of the search setting information 200 a location (address) of a top of the search result 300 created in (S501).

(S503) The record number search unit 106 initializes the number of hits 205.

(S504) The record number search unit 106 performs a search to retrieve a record number in the RDBMS 120. Here, the record number is a number to be used to uniquely specify a record in a table by the RDBMS 120. The record number may be held as a particular name, or a column that meets a specific condition in designing a table may be regarded as the record number, depending on a type of RDBMS 120. It is here assumed that the RDBMS 120 holds the record number as a column with a name "_RowID_" for each table. That is, the record number search unit 106 creates, for example, an SQL statement "SELECT _RowId_ From "Table Name" WHERE "Search Condition";". The record number search unit 106 sets a value set to the search target table 203 to "Table Name", and a value set to the search condition 204 to "Search Condition". Then, the record number search unit 106 transmits the SQL statement to the RDBMS 120, and receives a response.

(S505) The record number search unit 106 determines whether the response from the RDBMS 120 is error or not. When it is determined not error (No in S505), the process moves to (S506). Meanwhile, when it is determined error (Yes in S505), the process moves to (S510).

(S506) The record number search unit 106 retrieves the search result, namely, the record number from the RDBMS 120.

(S507) The record number search unit 106 receives any one response of "no error," "error occurred," and "search completion" from the RDBMS 120, and determines whether or not the response is either of "error occurred" or "search completion." Then, when the response from the RDBMS 120 is "no error" (No in S507), the process moves to (S508). Meanwhile, when the response from the RDBMS 120 is either of "error occurred" or "search completion" (Yes in S507), the process moves to (S510).

(S508) The record number search unit 106 sequentially sets the record number retrieved in (S506) to a record number 301 in the search result 300 (while ranking the record number). Here, the setting processing of the record number to the search result 300 is performed not by overwriting but by addition. That is to say, each time a record number is retrieved, the number of sets of the record numbers 301, the retrieved flags 302 and the retrieval target column values 303 increases.

(S509) The record number search unit 106 increments (+1) the number of hits 205. Then, the process is returned to the processing of retrieving the record number from the RDBMS 120 (S506) again, and the processing is repeated.

(S510) The record number search unit 106 notifies completion of counting up the number of hits to the notification unit 104. Further, the record number search unit 106 also notifies (transmits) a reason ("search completion" or "error occurred") why the process transits from (S505) or (S507) to (S510) to the notification unit 104.

(S511) The record number search unit 106 completes the counting operation of the number of hits.

The notification unit 104 receives a completion notification of counting up the number of hits transmitted by the record number search unit 106 in (S510). When the reason why the process transits to (S510), which is included in the received notification, is "no error" (here, "search completion" is regarded as "no error"), the notification unit 104 updates the status 207 in the search setting information 200 to a value indicating "completion of the number of hits retrieval," and notifies (transmits) the number of hits 205 to the application 110. Meanwhile, when the reason why the process transits to (S510), which is included in the received notification, is "error occurred," the notification unit 104 updates the status 207 to a value indicating "error occurred," and notifies (transmits) information indicating occurrence of error to the application 110. It is here assumed that a callback function for notification is passed to the search device 100 beforehand from the application 110.

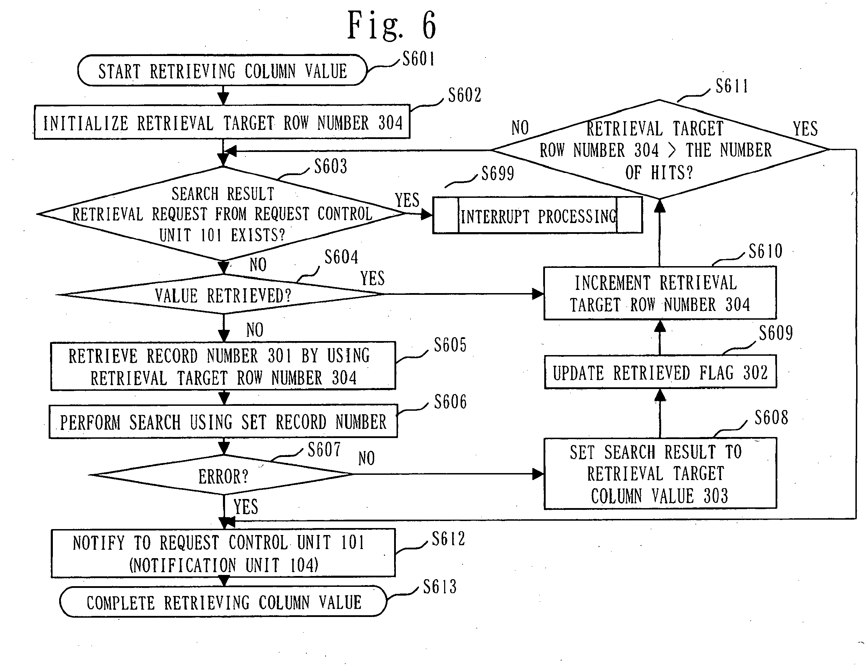

Next, an explanation is provided of a column value retrieval processing (corresponds to (4) of the above-mentioned simple description of operations) as an operation of the search control unit 105 after the number of hits retrieval processing, based on Fig. 1, Fig. 2, Fig. 3, Fig. 5 and Fig. 6. Fig. 6 is a flowchart describing the column value retrieval processing for retrieving a value of a column by the target item retrieval unit 107.

(S601) When the record number search unit 106 completes the counting operation of the number of hits in (S511), the target item retrieval unit 107 in the search control unit 105 starts a processing to set the value of the column indicated by the retrieval target column 202 to the search result 300.

(S602) The target item retrieval unit 107 initializes the retrieval target row number 304 to 1.

(S603) The target item retrieval unit 107 determines whether or not the search result retrieval request has been received from the rank information input unit 103. When it is determined that the search result retrieval request has not been received (No in S603), the process moves to (S604). Meanwhile, when it is determined that the search result retrieval request has been received (Yes in S603), the process moves to an interrupt processing (S699). An explanation of the interrupt processing is provided below.

(S604) The target item retrieval unit 107 determines whether or not a value of a record corresponding to the retrieval target row number 304 has been retrieved based on a retrieved flag 302 of the record corresponding to the retrieval target row number 304. When the value of the record corresponding to the retrieval target row number 304 has not been retrieved (No in S604), the process moves to (S605). Meanwhile, when the value of the record corresponding to the retrieval target row number 304 has been retrieved (Yes in S604), the process moves to (S610).

(S605) The target item retrieval unit 107 retrieves a record number 301 at a rank indicated by the retrieval target row number 304 (rank applied in (S508)). The target item retrieval unit 107 retrieves, for example, a record number 301 at the top (first rank) of the search result when the value of the retrieval target row number 304 is 1.

(S606) The target item retrieval unit 107 performs a processing of retrieving the value of the column indicated by the retrieval target column 202 of the record specified by the record number 301 retrieved in (S605) on the RDBMS 120. For example, when the search start request received from the application 110 is an SQL statement "SELECT Name, Genre, Address FROM ShopData WHERE Genre = 'Japanese Food';", the target item retrieval unit 107 creates and executes an SQL statement "SELECT "Series of Column Names" FROM "Table Name" WHERE _RowId_ = "Record Number"". Here, the target item retrieval unit 107 sets the value set to the retrieval target column 202 to "Series of Column Names", the value set to the retrieval target table 203 to "Table Name", and the record number 301 retrieved in (S605) to "Record Number". Then, the target item retrieval unit 107 transmits the SQL to the RDBMS 120, and receives a response.

(S607) The target item retrieval unit 107 determines whether the response from the RDBMS 120 is error nor not. When it is determined not error (No in S607), the process moves to (S608). Meanwhile, when it is determined error (Yes in S607), the process moves to (S612).

(S608) The target item retrieval unit 107 sets the search result to a retrieval target column value 303 at the rank indicated by the retrieval target row number 304. That is, in a case of the SQL, each value of Name, Genre and Address is set to the retrieval target column value 303.

(S609) The target item retrieval unit 107 updates the retrieved flag 302 at the rank indicated by the retrieval target row number 304 to a value indicating "retrieved."

(S610) The target item retrieval unit 107 increments (+1) the value of the retrieval target row number 304.

(S611) The target item retrieval unit 107 determines whether the value of the retrieval target row number 304 is greater than the value of the number of hits 205 in the search setting information 200. When the value of the retrieval target row number 304 is equal to or less than the number of hits 205 (No in S611), the process moves to (S603), and the processing is repeated. Meanwhile, when the value of the retrieval target row number 304 is greater than the value of the number of hits 205 (Yes in S611), the process moves to (S612).

(S612) The target item retrieval unit 107 transmits a completion notification of the search processing to the notification unit 104. That is, the target item retrieval unit 107 notifies (transmits) a value indicating the reason why the process transits to (S612) ("error occurred" or "the value of the retrieval target row number 304 is greater than the value of the number of hits 205 (corresponds to search completion)") to the notification unit 104.

(S613) The target item retrieval unit 107 completes the operation of retrieving the value of the column indicated by the retrieval target column 202.

The notification unit 104 receives the completion notification of the search processing transmitted by the target item retrieval unit 107 in (S612). When the reason why the process moves to (S612), which is included in the received notification, is "no error" (here "search completion" is regarded as "no error"), the notification unit 104 updates the status 207 in the search setting information 200 to a value indicating "search completion," and notifies (transmits) information indicating completion of the search to the application 110. Meanwhile, when the reason why the process moves to (S612), which is included in the received notification, is "error occurred," the notification unit 104 updates the status 207 to a value indicating "error occurred," and notifies (transmits) information indicating that an error occurred to the application 110. It is here assumed that a callback function for notification is passed to the search device 100 beforehand from the application 110.

The application 110 transmits the search result retrieval request including the identifier whereby the search setting information 200 is identifiable, the rank of the record desired to be retrieved (what number from the top), and the column desired to be retrieved to the search device 100 with the target item retrieval unit 107 having completed the search processing, that is, with the status 207 being set the value indicating "search completion" according to the above-mentioned processing. Then, the rank information input unit 103 receives the search result retrieval request, and transmits the search result retrieval request to the target item retrieval unit 107. The target item retrieval unit 107 retrieves the value of the column indicated by the search result retrieval request of the record at the rank indicated by the search result retrieval request, from the retrieval target column value 303 corresponding to the record at the rank indicated by the search result retrieval request of the search result 300 in the search result accumulation unit 108. Then, the target item retrieval unit 107 transmits the retrieved value to the application 110 via the notification unit 104 (corresponds to (5) to (8) of the above-mentioned simple description of operations).

Specifically, when the application 110 transmits a search result retrieval request requesting retrieval of "Address column of the 500^{th} record" to the rank information input unit 103, the rank information input unit 103 first confirms whether the status 207 is set the value of "search completion." Then, since the search processing has been completed in this case, the target item retrieval unit 107 retrieves a value of the Address column from a retrieval target column value 303 of a record corresponding to an ordinal number (500^{th} in this case), and the notification unit 104 transmits the value of the Address column to the application 110.

Meanwhile, when the status 207 in the search setting information 200 is set the value of "error occurred," the notification unit 104 returns error to the application 110.

The above is a detailed explanation of the operation in a case when the processing is performed following the flow as described in the simple description of operations. However, there is a case when the processing is performed following a different flow from the simple description of operations. That is when the interrupt processing (S699) in Fig. 6 is performed. Thus, it is next provided an explanation of an operation in a case when the interrupt processing (S699) is performed, based on Fig. 1, Fig. 2, Fig. 3, Fig. 6 and Fig. 7.

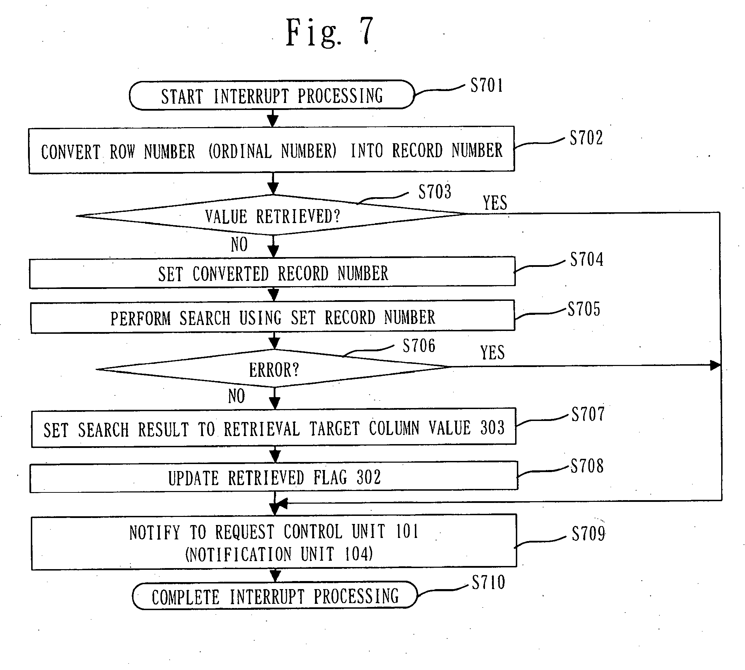

First, the interrupt processing is described based on Fig. 7. Fig. 7 is a flowchart describing the operation of the interrupt processing (S699) in Fig. 6. The interrupt processing is a processing occurred at the time the application 110 transmits a search result retrieval request to the search device 100 while the target item retrieval unit 107 is performing the column value retrieval processing as indicated in Fig. 6.

(S701) The target item retrieval unit 107 having received the search result retrieval request while performing the column value retrieval processing determines that it has received the search result retrieval request in (S603) as mentioned above (Yes in S603), and moves to the interrupt processing (S699). Then, the interrupt processing is started.

(S702) The target item retrieval unit 107 refers to the search result 300, and obtains a record number 301 from an ordinal number. That is, the target item retrieval unit 107 retrieves the record number 301 at a rank indicated by the ordinal number.

(S703) The target item retrieval unit 107 determines whether a value of a corresponding record has been retrieved or not based on a value of a retrieved flag 302. When the value of the corresponding record has not been retrieved (No in S703), the process moves to (S704). Meanwhile, when the value of the corresponding record has been retrieved (Yes in S703), the process moves to (S709).

(S704) The target item retrieval unit 107 performs the processing to retrieve a value of the column indicated by the retrieval target column 202 of the record specified by the record number 301 on the RDBMS 120. For example, when a search start request received from the application 110 is an SQL statement "SELECT Name, Genre, Address FROM ShopData WHERE Genre = 'Japanes Food';", the target item retrieval unit 107 creates an SQL statement "SELECT "Series of Column Names" FROM "Table Name" WHERE _RowId_ = "Record Number"". Here, the target item retrieval unit 107 sets the value set to the retrieval target column 202 to "Series of Column Names", the value set to the retrieval target table 203 to "Table Name", and the record number 301 retrieved in (S702) to "Record Number".

(S705) The target item retrieval unit 107 performs a search set in (S704) and receives a response.

(S706) The target item retrieval unit 107 determines whether the response from the RDBMS 120 is error or not. When it is determined not error (No in S706), the process moves to (S707). Meanwhile, when it is determined error (Yes in S706), the process moves to (S709).

(S707) The target item retrieval unit 107 sets the retrieved value to the retrieval target column value 303 in the search result 300.

(S708) The target item retrieval unit 107 updates the retrieved flag 302 to the value indicating "retrieved."

(S709) The target item retrieval unit 107 notifies (transmits) a value indicating "processing completion" to the request control unit 101.

(S710) The target item retrieval unit 107 completes the interrupt processing.

Then, when the interrupt processing is completed, the notification unit 104 transmits the value set in the retrieval target column value 303 in the search result 300 to the application 110.

Next, an explanation is provided of a processing in a case when the application 110 having received a notification of the number of hits transmits a search result retrieval request for requesting retrieval of "a value of the Name column of the first (top) record" to the rank information input unit 103.

It is here assumed that a value of a column indicated by the retrieval target column value 303 of the first record has already been set to the search result accumulation unit 108. Further, it is assumed that the target item retrieval unit 107 has not completed the search processing. That is, the target item retrieval unit 107 is during execution of the above-mentioned processing in Fig. 6.

The target item retrieval unit 107 having received the search result retrieval request determines that it has received the search result retrieval request in (S603) as described above (Yes in S603), proceeds to the interrupt processing (S699), and starts the interrupt processing (S701). Next, the target item retrieval unit 107 retrieves a record number set to a record number 301 at a rank (the first rank in this case) indicated by an ordinal number (S702). The target item retrieval unit 107 determines whether or not a value of a corresponding record has been retrieved based on a value of a retrieved flag 302 (S703). In this case, the value of the first record has already been retrieved. Therefore, the target item retrieval unit 107 notifies (transmits) the value indicating processing completion to the notification unit 104 (S709). Then, the notification unit 104 transmits the value of the Name column set to the retrieval target column value 303 of the record at the rank (the first rank in this case) indicated by the ordinal number of the search result 300 from the search result accumulation unit 108 to the application 110.

Next, an explanation is provided of an operation of the search device 100 in a case when the application 110 issues a request to retrieve "a value of the Address column of the 1000^{th} record."

The target item retrieval unit 107 having received the search result retrieval request determines that it has received the search result retrieval request in (S603) as described above (Yes in S603), proceeds to the interrupt processing (S699), and starts the interrupt processing (S701). Next, the target item retrieval unit 107 retrieves a record number set to a record number 301 at a rank (1000^{th} rank in this case) indicated by an ordinal number (S702). The target item retrieval unit 107 determines whether or not a value of a corresponding record has been retrieved based on a value of a retrieved flag 302 (S703). In this case, the value of the 1000^{th} record has not been received. Therefore, the target item retrieval unit 107 sets the record number to a search condition (S704), and performs a search (S705). When a response from the RDBMS 120 is no error (No in S706), the target item retrieval unit 107 sets the retrieved value to a retrieval target column value 303 (S707), and updates the retrieved flag 302 to "retrieved" (S708). The target item retrieval unit 107 notifies (transmits) the value indicating processing completion to the notification unit 104 (S709). Then, the notification unit 104 transmits a value of the Address column set to a retrieval target column value 303 of a record at a rank (1000^{th} rank in this case) indicated by an ordinal number of a search result 300 from the search result accumulation unit 108 to the application 110.

The search device 100 according to the present embodiment has effects as follows.

When the search device 100 according to the present embodiment receives a search start request from the application 110, the search device 100 first retrieves only record numbers that meet the search condition 204, obtains the number of hits by counting the number of the record numbers, and notifies the number of hits to the application 110 at a point of time of completion of counting up the number of hits. Therefore, the application 110 can perform determination of how many items exist in a search result, how many display pages the search result corresponds to (when 500 items exist in the search result, it corresponds to 100 pages if 5 items can be displayed at a time), etc. at a high speed before completing retrieval of all the search result. Therefore, the processing of "display next page" and "display previous page" can be converted into specific processing instructions using record numbers of records to be actually displayed at a high speed.

Further, the search device 100 according to the present embodiment performs a search in a database by specifying a record number as a search condition in order to retrieve a value of a record at an arbitrary location after counting up the number of hits. Therefore, a time it takes for the search device 100 according to the present embodiment to retrieve a record at an arbitrary location after counting up the number of hits does not depend on the number of hits. In other words, conventionally it has been necessary to retrieve records sequentially from a top of a search result. Therefore, in retrieving a value of a record at an arbitrary location, the farther the record is located from the top, the longer it takes to retrieve the record in proportion to the number of hits. However, the search device 100 according to the present embodiment can retrieve a value of a record at a high speed even it is located far from the top.

Further, it is possible for the search device 100 according to the present embodiment to receive a search result retrieval request specifying an ordinal number and a column name, which are desired to be retrieved, from the application 110 even when retrieval of values of all records that meet the search condition 204 is not completed.

When the search device 100 receives the search result retrieval request at a time when retrieval of the values of all the records is not completed, the search device 100 suspends the running column value retrieval processing as indicated in Fig. 6, retrieves a value in a column of a record specified by the application 110 beforehand, and transmits the value to the application 110. Then, the search device 100 resumes the suspended column value retrieval processing as indicated in Fig. 6 again. Therefore, a time required for retrieving a record desired to be retrieved is almost the same wherever the record is located (top, bottom or middle, etc.) within the search result. In other words, even a value of a record at the bottom can be retrieved at a high speed.

Here, it is also acceptable that the search device 100 operates as follows.

In the above explanation, it is described a case wherein the application 110 issues a search result retrieval request to the search device 100 after receiving a notification of the number of hits. However, it is also acceptable that the application 110 issues a search result retrieval request to the search device 100 before being notified of the number of hits.

In this case, the record number search unit 106 continues retrieval of record numbers until the record number search unit 106 retrieves a record number corresponding to the specified ordinal number from the RDBMS 120. When the record number search unit 106 retrieves the corresponding record number, the target item retrieval unit 107 sets a value to the retrieval target column value 303 using the record number. Then, after setting the value to the retrieval target column value 303, the record number search unit 106 returns again to the retrieval processing of record numbers. Meanwhile, the notification unit 104 transmits the value set to the retrieval target column value 303 by the target item retrieval unit 107 to the application 110. This operation enables the application 110 to retrieve a record whose record number has been retrieved before the number of hits is obtained, and to realize a high-speed representation of records.

That is, when the rank information input unit 103 inputs the search result retrieval request to the record number search unit 106 before the record number search unit 106 completes retrieving of record numbers, the record number search unit 106 continues retrieval of record numbers up to a rank indicated by the search result retrieval request. Then, when the record number search unit 106 retrieves the record numbers up to the rank indicated by the search result retrieval request, the target item retrieval unit 107 retrieves data in the retrieval target column 202 of the record specified by the record number at the rank indicated by the search result retrieval request.

Further, in the above explanation, it is described a case wherein the application 110 requests retrieval of one column as the search result retrieval request. However, it is also acceptable that the application 110 can retrieve two or more columns by one search result retrieval request. In this case, the notification unit 104 retrieves the value of the columns specified in the search result retrieval request by the application 110 from the retrieval target column value 303 in the search result 300 of the search result accumulation unit 108, and transmits the values to the application 110. This operation enables reduction of the number of times the application 110 performs search result retrieval requests to the search device 100.

Further, in the above explanation, the application 110 specifies a column by specifying a name of the column (for example, Address) in the search result retrieval request. However, it is also acceptable that the application 110 specifies the column by specifying "what number column" it appears in a record by a search result retrieval request. That is, if a column at the beginning is the first column, Name column is the first column, Genre column is the second column, and Address column is the third column. In this case, a value of the column to be transmitted to the application 110 can be determined by the target item retrieval unit 107 or the notification unit 104 based on the number of the column and the retrieval target column 202.

Furthermore, in the above explanation, even in a case of retrieving a value of a record that has been already set to the search result accumulation unit 108, a search result retrieval request is transmitted to the target item retrieval unit 107, and the target item retrieval unit 107 retrieves the value from the retrieval target column value 303. However, it is also acceptable not to transmit a search result retrieval request to the target item retrieval unit 107 when the rank information input unit 103 refers to a retrieved flag 302 of an appropriate record and the appropriate retrieval target column value 303 has already been retrieved, and to have the rank information input unit 103 transmit the value of the retrieval target column value 303 to the application 110 via the notification 104. This operation prevents suspending the operation of the target item retrieval unit 107 and enables reducing a time to complete the search result retrieval processing by the target item retrieval unit 107.

Further, in the above explanation, the target item retrieval unit 107 restarts the search processing from a point where it is suspended when the target item retrieval unit 107 completes the interrupt processing. However, it is also acceptable to have the search processing restarts from a point specified in the interrupt processing. For example, when a search result retrieval request for the 500^{th} record arrives at a time the first to 100^{th} records have been set to the search result accumulation unit 108, and a processing for the request is completed, it is also acceptable that a retrieval processing for the 501^{st} to 1000^{th} records is first performed, and then a retrieval processing for the 101^{st} to 499^{th} records are performed.

In order to realize such an operation, for example, the value in the retrieval target row number 304 in the interrupt processing (S699) is set to a subsequent value of the ordinal number in the search result retrieval request (in the above example, the ordinal number is 500^{th}, hence it is the subsequent number, 501^{st}). Moreover, an item of "the number of records of retrieval completed" is added to the search result 300, a processing by the target item retrieval unit 107 to initiate the number of records of retrieval completed is added in (S602), and further, the processing in (S610) is changed to "increment the number of records of retrieval completed" and "set a remainder (residue) after dividing the incremented value of the retrieval target row number 304 by the number of hits to the retrieval target row number 304," and in addition, (S611) is changed to "the number of records of retrieval completed > the number of hits?". The reason why the remainder (residue) after dividing the incremented value of the retrieval target row number 304 by the number of hits is set to the retrieval target row number 304 is to return the retrieval target row number 304 not to the 1001^{st}, but to the first, after the retrieval target row number 304 changes from the 501^{st} to 1000^{th}.

This operation enables the application 110 to first retrieve search results of the 501^{st} and 502^{nd} which are expected after retrieving the 500^{th} record, and the search device 100 to respond to the application 110 at a high speed.

Thus, when the record number search unit 106 finishes retrieving record numbers, the target item retrieval unit 107 retrieves data in the retrieval target column 202 of records specified by the record numbers sequentially from the top of the rank applied by the record number search unit 106, and stores the data in the search result accumulation unit 108. Then, when the rank information input unit 103 inputs a search result retrieval request to the target item retrieval unit 107 while the target item retrieval unit 107 retrieves the data in the retrieval target column 202 of the search target table 203, and stores the data in the search result accumulation unit 108, the target item retrieval unit 107 retrieves data in a retrieval target column 202 of records specified by record numbers sequentially from the rank indicated in the search result retrieval request, and transmits the data to the application 110.

In this case, if the data of the retrieval target column 202 has already been retrieved from the record specified by the record number at the rank indicated in the search result retrieval request when the rank information input unit 103 inputs the search result retrieval request while the target item retrieval unit 107 retrieves the data in the retrieval target column 202 of the search target table 203 and stores the data in the search result accumulation unit 108, it is acceptable to have the target item retrieval unit 107 continue the processing to retrieve the data of the retrieval target column 202 of the records specified by the record numbers sequentially from the top, and to store the data in the search result accumulation unit 108.

Further, in the above explanation, it is explained that the record number search unit 106 retrieves only record numbers from the RDBMS 120 in counting the number of hits. However, it is also acceptable that a column specified by the application 110 is also retrieved from the RDBMS 120 at the same time the record numbers are retrieved. This operation enables retrieving the search result at a higher speed when an appropriate index is provided to the search target table 203.

The above embodiment is summarized as follows.

A control method of a search result retrieval order of the search device 100 includes dividing a search start request received from the application 110 into a search of record numbers that meet a search condition, and a search of a column specified by the application 110 by using the record numbers retrieved in the search as a search condition, counting up the number of the records that meet the search condition in the search of the record numbers, and notifying the number of the records that meet the search condition to the application 110, suspending the search using the record numbers as a condition upon receipt of a search result retrieval request from the application 110 during the search by using the record numbers as the condition, processing the search result retrieval request on a priority basis, and after that, restarting the search by using the record numbers as the condition from a point where it is suspended.

Further, the control method of the search result retrieval order of the search device 100 includes continuing retrieval of record numbers until it retrieves an appropriate record number when a search result retrieval request arrives before completion of counting up the number of records that meet the search condition, and when the appropriate record number is retrieved, performing the search of the column specified by the application 110 by using the record number as a search condition, and restarting counting the number of hits after returning a value retrieved by the search to the application 110.

Further, the control method of the search result retrieval order of the search device 100 includes providing values of appropriate columns at a time to the application 110 upon receipt of a search result retrieval request specifying a plurality of column names.

Further, the control method of the search result retrieval order of the search device 100 includes, upon receipt of a search result retrieval request specifying one or more numbers corresponding to an order of retrieval target columns specified in a search start request, identifying appropriate columns from the numbers, and providing values of the columns to the application 110.

Further, the control method of the search result retrieval order of the search device 100 includes, when a record specified in a search result retrieval request from the application 110 has already been retrieved, providing the value which has been retrieved to the application 110 without suspending the search processing using a record number as a search condition.

Further, the control method of the search result retrieval order of the search device 100 includes, after responding to the search result retrieval request from the application 110, setting a subsequent record number of a record number which has been retrieved by the search result retrieval request as a point to restart a search using a record number.

Further, the control method of the search result retrieval order of the search device 100 includes, retrieving a column specified by the application 110 simultaneously with retrieving record numbers, which is performed for counting up the number of hits, and precluding the column retrieved simultaneously with the record numbers from a search target in the search of the column specified by the application 110 using a record number as a search condition.

Next, an explanation is provided of a hardware configuration of the search device 100 according to the embodiment.

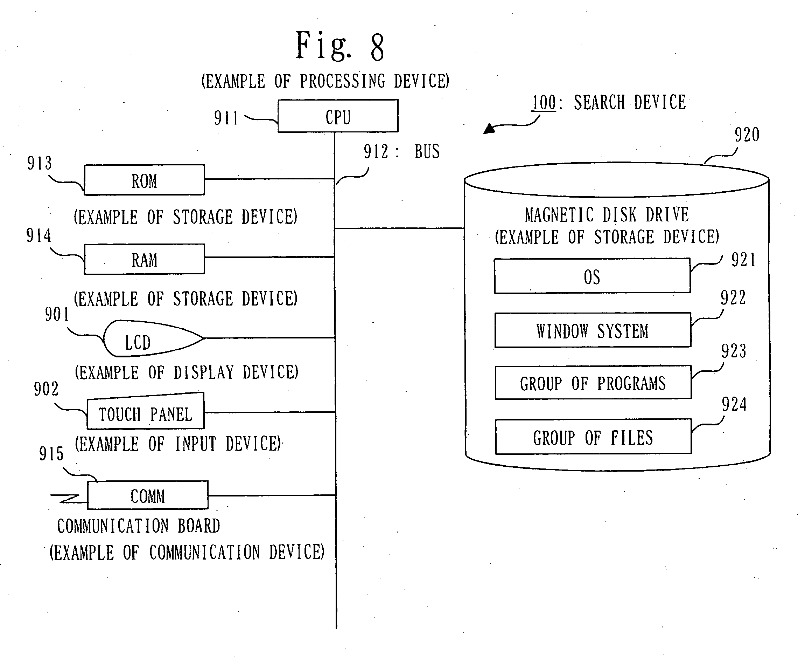

Fig. 8 is a diagram describing one example of the hardware configuration of the search device 100.

As shown in Fig. 8, the search device 100 includes a Central Processing Unit (CPU, or central processor, processing unit, arithmetic unit, micro processing unit, microcomputer, processor) 911 to execute a program. The CPU 911 connects with a ROM 913, a RAM 914, a Liquid Crystal Display (LCD) 901, a keyboard 902, a communication board 915, and a magnetic disk drive 920 (HDD, SDD, etc.) via a bus 912, and controls these hardware devices. It is also acceptable to use a storage device such as an optical disk unit or a memory card reader/writer, etc. instead of the magnetic disk drive 920.

The ROM 913 and the magnetic disk drive 920 are examples of nonvolatile memories. The RAM 914 is one example of a volatile memory.

The communication board 915 and the keyboard 902 are examples of the input devices.

Further, the communication board 915 and the bus 912 are examples of output devices.

Furthermore, the communication board 915 and the bus 912 are examples of the communication devices.

Further, the LCD 901 is one example of a display device.

An operating system (OS) 921, a window system 922, a group of programs 923 and a group of files 924 are stored in the magnetic disk drive 920 and the ROM 913, etc. Programs in the group of programs 923 are executed by the CPU 911, the operating system 921 and the window system 922.

Programs for executing functions described in the above explanation as the "request control unit 101," the "search information input unit 102," the "rank information input unit 103," the "notification unit 104," the "search control unit 105," the "record number search unit 106," the "target item retrieval unit 107," and the "search result accumulation unit 108," etc., and other programs are stored in the group of programs 923. The programs are read and executed by the CPU 911.

Information, data, a signal value, a variable value and a parameter described in the above explanation as the "search setting information 200," and the "search result 300" etc. are stored in the group of files 924 as every particular item in "files" or "databases." The "files" or "databases" are stored in a storage medium such as a disk and a memory. The information, data, signal value, variable value and the parameter stored in the storage medium such as the disk and the memory are read into a main memory or a cache memory by the CPU 911 via a read/write circuit, and used for operations by the CPU 911, such as extraction, search, reference, comparison, computation, calculation, processing, output, print, display, etc. During the operations by the CPU 911 of extraction, search, reference, comparison, computation, calculation, processing, output, print and display, the information, data, signal value, variable value and parameter are temporarily stored in the main memory, the cache memory or a buffer memory.

Further, the parts of arrows in the flow charts in the above explanation mainly indicate input and output of data or signals, and the data or signals are recorded in a memory of the RAM 914, or in another recording medium such as or an optical disk, etc. Furthermore, the data or signals are transmitted online through the bus 912, a signal line, a cable or another transmission medium.

Thus, when the search device 100, the application 110, the RDBMS 120, and the storage device 130 are provided in one device including the hardware as shown in Fig. 8, for example, the application 110 stored in the ROM 913, the RAM 914 or the magnetic disk drive 920 is executed by the CPU 911 to transmit a request, such as a search start request, etc. to the search device 100 via the bus 912. Then, the functions of the search device 100 stored in the ROM 913, the RAM 914 or the magnetic disk drive 920 are executed by the CPU 911 to transmit a search request (SQL statement, etc.) to the RDBMS 120 stored in the ROM 913, the RAM 914 or the magnetic disk drive 920 via the bus 912. The RDBMS 120 retrieves a search result from a database stored in the storage device 130 such as the ROM 913, the RAM 914 or the magnetic disk drive 920 via the bus 912 to transmit the search result to the search device 100. Then, the functions of the search device 100 store the search result in the ROM 913, the RAM 914 or the magnetic disk drive 920. Further, the functions of the search device 100 transmit the search result to the application 110 via the bus 912.

As shown above, it is acceptable that the search device 100, the application 110, the RDBMS 120 and the storage device 130 are provided separately as individual devices.

Further, what is described as "··· unit" in the above explanation may be "··· circuit," "··· device," "··· apparatus," "··· means," "··· function," or alternatively, "··· step," "··· procedure," "··· processing." Further, what is described as "··· device" may be "··· circuit," "··· unit," "··· apparatus," "··· means," "··· function," or alternatively, "··· step," "··· procedure," "··· processing." Further, what is described as "··· processing" may be "··· step." That is, it is acceptable to have what is described as "··· unit" realized by firmware stored in the ROM 913. Alternatively, it is also acceptable to have what is described as "··· unit" performed only by software or hardware such as an element, a device, a board, a wiring, etc., or by software in combination with hardware, or further in combination with firmware. The firmware and the software are stored as programs in a storage medium such as the ROM 913, etc. The programs are read and executed by the CPU 911. That is, the programs allow a computer, etc. to function as "··· unit" as described above. Alternatively, the programs allow a computer, etc. to perform procedures or methods oaf " ... unit" as described above.

Further, what is described as the "information" in the above explanation may be "value" or "data", and similarly, what is described as "value" may be "information" or "data", and similarly, what is described as "data" may be "information" or "value."

A search device according to the present invention retrieves a record number while ranking the record number before retrieving data of an item to be retrieved. Therefore, it is possible for the search device according to the present invention to convert the processing instructions such as "display next page" and "display previous page" as described above into specific processing instructions using a record number of a record to be actually displayed at a high speed, and to retrieve a record located at an arbitrary location in a search result at a high speed.

Having thus described several particular embodiments of the present invention, various alterations, modifications, and improvements will readily occur to those skilled in the art. Such alterations, modifications, and improvements are intended to be part of this disclosure, and are intended to be within the scope of the present invention. Accordingly, the foregoing description is by way of example only, and is not intended to be limiting. The present invention is limited only as defined in the following claims and the equivalents thereto.

## Claims

1. A search device (100) for searching for data in a database (130), the search device (100) comprising:
a search information input unit (102) to input search information indicating a retrieval target item (202), a search target table (203) and a search condition (204);
a record number search unit (106) to search for a record that meets the search condition (204) indicated by the search information from the search target table (203) indicated by the search information input by the search information input unit (102), the search target table (203) being a table in the database (130), and to retrieve a record number that uniquely identifies a record in the search target table (203) from the record searched while ranking the record number;
a rank information input unit (103) to input rank information indicating a prescribed rank; and
a target item retrieval unit (107) to retrieve from the search target table (203) in the database (130), data of the retrieval target item (202) of a record specified by a record number at a rank indicated by the rank information input by the rank information input unit (103), the record number being retrieved by the record number search unit (106), wherein
when the record number search unit (106) completes retrieving the record number, the target item retrieval unit (107) retrieves, from the search target
table (203) in the database (130), data of the retrieval target item (202) of a record specified by the record number sequentially from a top of a rank applied by the record number search unit (106), and stores the data in a storage device (108), **characterised in that** when the rank information input unit (103) inputs the rank information while the target item retrieval unit (107) retrieves, from the search target table (203) in the database(130), data of the retrieval target item (202) of the search target table (203) and stores the data in the storage device (108), the target item retrieval unit (107) retrieves data of the retrieval target item (202) of a record specified by the record number sequentially from the rank indicated by the rank information.

2. The search device as defined in claim 1, wherein
the search information input unit (102) inputs the search information according to an input from a prescribed search instructing unit (110), and
the record number search unit (106) retrieves the record numbers and counts up the number of the records that meet the search condition, and the search device (100) further comprises a notification unit (104) to notify the number of the records counted by the record number search unit (106) to the prescribed search instructing unit (110).

3. The search device as defined in either claim 1 or 2, wherein
the target item retrieval unit (107) retrieves, from the search target table (203) in the database (130), the data of the retrieval target item (202) of the record specified by the record number and stores the data in the storage device (108), when the record number search unit (106) completes retrieving the record number, and retrieves the data of the retrieval target item (202) of the record specified by the record number at the rank indicated by the rank information when the rank information input unit (103) inputs the rank information.

4. The search device as defined in anyone of claim 1 through claim 3, wherein
the target item retrieval unit (107) retrieves, from the search target table (203) in the database (130) data of the retrieval target item (202) of a record specified by the record number sequentially from a top of a rank applied by the record number search unit (106), and stores the data in the storage device (108), when the record number search unit (106) completes retrieving the record number, and
when the rank information input unit (103) inputs the rank information while the target item retrieval unit (107) retrieves data of the retrieval target item (202) of the search target table (203) and stores the data in the storage device (108), but when the data of the retrieval target item (202) has already been retrieved from the record specified by the record number at the rank indicated by the rank information, the target item retrieval unit (107) continues a processing of retrieving the data of the retrieval target item (202) of the record specified by the record number sequentially from the top, and of storing the data in the storage device (108).

5. The search device as defined in any one of claim 1 through claim 4, wherein
the record number search unit (106) continues retrieving the record number up to the rank indicated by the rank information when the rank information input unit (103) inputs the rank information before the record number search unit (106) completes retrieving the record number, and
the target item retrieval unit (107) retrieves, from the search target table (203) in the database (130), data of the retrieval target item (202) of the record specified by the record number at the rank indicated by the rank information when the record number search unit (106) retrieves the record number up to the rank indicated by the rank information.

6. The search device as defined in anyone of claim 1 through claim 5, wherein
the target item retrieval unit (107) retrieves a prescribed item from the record that meets the search condition at a time the record number search unit (106) retrieves the record number.

7. A search method for searching for data in a database, the search method comprising:
a search information inputting step to input search information indicating a retrieval target item (202), a search target table (203) and a search condition (204) by an input device;
a record number searching step, by a processing device, to search for a record that meets the search condition (204) indicated by the search information from the search target table (203) indicated by the search information input in the search information inputting step, the search target table (203) being a table in the database (130), and to retrieve a record number that uniquely identifies a record in the search target table (203) from the record searched while ranking the record number;
a rank information inputting step to input rank information indicating a prescribed rank by the input device; and
a target item retrieving step to retrieve, from the search target table (203) in the database (130), data of the retrieval target item (202) of a record specified by a record number at a rank indicated by the rank information input in the rank information inputting step by the processing unit, the record number being retrieved in the record number
searching step,
wherein
when the record number searching step completes retrieving the record number, the target item retrieving step retrieves, from the search target table (203) in the database (130), data of the retrieval target item (202) of a record specified by the record number sequentially from a top of a rank applied by the record number searching step, and stores the data in a storage device (108), **characterised in that** when the rank information inputting step inputs the rank information while the target item retrieving step retrieves, from the search target table (203) in the database(130), data of the retrieval target item (202) of the search target table (203) and stores the data, the target item retrieving step retrieves data of the retrieval target item (202) of a record specified by the record number sequentially from the rank indicated by the rank information.

8. A search program for searching for data in a database (130), the search program allows a computer to execute:
a search information input process to input search information indicating a retrieval target item (202), a search target table (203) and a search condition (204);
a record number search process to search for a record that meets the search condition (204) indicated by the search information from the search target table (203) indicated by the search information input in the search information input process, the search target table being a table in the database (130), and to retrieve a record number that uniquely identifies a record in the search target table (203) from the record searched while ranking the record number;
a rank information input process to input rank information indicating a prescribed rank; and
a target item retrieval process to retrieve, from the search target table (203) in the database (130), data of the retrieval target item (202) of a record specified by a record number at a rank indicated by the rank information input in the rank information input process, the record number being retrieved in the record number search process,
wherein
when the record number search process completes retrieving the record number the target item retrieval process retrieves, from the search target table (203) in the database (130), data of the retrieval target item (202) of a record specified by the record number sequentially from a top of a rank applied by the record number search process, and stores the data in a storage device (108),
**characterised in that** when the rank information input process inputs the rank information while the target item retrieval process retrieves, from the search target table (203) in the database (130), data of the retrieval target item (202) of the search target table (203) and stores the data in the storage device (108), the target item retrieval process retrieves data of the retrieval target item (202) of a record specified by the record number sequentially from the rank indicated by the rank information.

## Patentansprüche

1. Suchvorrichtung (100) zum Suchen nach Daten in einer Datenbank (130), welche Suchvorrichtung (100) aufweist:
eine Suchinformations-Eingabeeinheit (102) zum Eingeben von Suchinformationen, die einen Abrufzielposten (202) anzeigen. einer Suchzieltabelle (203) und einer Suchbedingung (204);
eine Datensatznummer-Sucheinheit (106) zum Suchen nach einem Datensatz, der der Suchbedingung (204) genügt, die durch die Suchinformationen von der Suchzieltabelle (203) angezeigt wird, die durch die Suchinformationseingabe durch die Suchinformations-Eingabeeinheit (102) angezeigt wird, wobei die Suchzieltabelle (203) eine Tabelle in der Datenbank (130) ist, und zum Abrufen einer Datensatznummer,
die eindeutig einen Datensatz in der Suchzieltabelle (203) identifiziert,
von dem gesuchten Datensatz, während die Datensatznummer einen Rang erhält;
eine Ranginformations-Eingabeeinheit (103) zum Empfangen von Ranginformationen, die einen vorgeschriebenen Rang anzeigen; und
eine Zielposten-Abrufeinheit (107) zum Abrufen, aus der Suchzieltabelle (203) in der Datenbank (130), von Daten des Abrufzielpostens (202) eines durch die Datensatznummer bestimmten Datensatzes auf einem Rang, der durch die von der Ranginformations-Eingabeeinheit (103) empfangenen Ranginformationen angezeigt wird, welche Datensatznummer durch die Datensatznummer-Sucheinheit (106) abgerufen wird, wobei
wenn die Datensatznummer-Sucheinheit (106) den Abruf der Datensatznummer beendet hat, die Zielposten-Abrufeinheit (107) aus der Suchzieltabelle (203) in der Datenbank (130) Daten des Abrufzielpostens (202) eines durch die Datensatznummer bestimmten Datensatzes aufeinanderfolgend von einer Spitze eines Rangs, der von der Datensatznummer-Sucheinheit (106) angewendet wird, abruft, und die Daten in einer Speichervorrichtung (108) speichert,
**dadurch gekennzeichnet, dass**
wenn die Ranginformations-Eingabeeinheit (103) die Ranginformationen empfängt, während die Zielposten-Abrufeinheit (107) aus der Suchzieltabelle (203) in der Datenbank (130) Daten des Abrufzielpostens (202) der Suchzieltabelle (203) abruft und die Daten in der Speichervorrichtung (108) speichert, die Zielposten-Abrufeinheit (107) Daten des Abrufzielpostens (202) eines durch die Datensatznummer bestimmten Datensatzes aufeinanderfolgend von dem durch die Ranginformationen angezeigten Rang abruft.

2. Suchvorrichtung nach Anspruch 1, bei der die Suchinformations-Eingabeeinheit (102) die Suchinformationen gemäß einer Eingabe von einer Anweisungseinheit (110) für eine vorgeschriebene Suche aufnimmt, und
die Datensatznummer-Sucheinheit (106) die Datensatznummern abruft und die Anzahl der Datensätze, die der Suchbedingung genügen, aufwärts zählt, und die Suchvorrichtung (100) weiterhin eine Mitteilungseinheit (104) zum Mitteilen der von der Datensatznummer-Sucheinheit (106) gezählten Anzahl der Datensätze an die Anweisungseinheit (110) für vorgeschriebene Suche aufweist.

3. Suchvorrichtung nach Anspruch 1 oder 2, bei der die Zielposten-Abrufeinheit (107) aus der Suchzieltabelle (203) in der Datenbank (130) die Daten des Abrufzielpostens (202) des durch die Datensatznummer bestimmten Datensatzes abruft und die Daten in der Speichervorrichtung (108) speichert, wenn die Datensatznummer-Sucheinheit (106) das Abrufen der Datensatznummer beendet hat, und die Daten des Abrufzielpostens (202) des durch die Datensatznummer bestimmten Datensatzes an dem Rang, der durch die Ranginformationen angezeigt ist, abruft, wenn die Ranginformations-Eingabeeinheit (103) die Ranginformationen empfängt.

4. Suchvorrichtung nach einem der Ansprüche 1 bis 3, bei der die Zielposten-Abrufeinheit (107) aus der Suchzieltabelle (203) in der Datenbank (130) Daten des Abrufzielpostens (202) eines durch die Datensatznummer bestimmten Datensatzes aufeinanderfolgend von einer Spitze eines Rangs, der von der Datensatznummer-Sucheinheit (106) angewendet wird, abruft und die Daten in der Speichervorrichtung (108) speichert, wenn die Datensatznummer-Sucheinheit (106) das Abrufen der Datensatznummer beendet hat, und,
wenn die Ranginformations-Eingabeeinheit (103) die Ranginformationen empfängt, während die Zielposten-Abrufeinheit (107) Daten des Abrufzielpostens (202) der Suchzieltabelle (203) abruft und die Daten in der Speichervorrichtung (108) speichert, aber wenn die Daten des Abrufzielpostens (202) bereits von dem Datensatz abgerufen wurden, der durch die Datensatznummer an dem durch die Ranginformationen angezeigten Rang bestimmt ist, die Zielposten-Abrufeinheit (107) eine Verarbeitung des Abrufens der Daten des Abrufzielpostens (202) des durch die Datensatznummer bestimmten Datensatzes aufeinanderfolgend von der Spitze und des Speicherns der Daten in der Speichervorrichtung (108) fortsetzt.

5. Suchvorrichtung nach einem der Ansprüche 1 bis 4, bei der die Datensatznummer-Sucheinheit (106) das Abrufen der Datensatznummer bis zu dem durch die Ranginformationen angezeigten Rang fortsetzt, wenn die Ranginformations-Eingabeeinheit (103) die Ranginformationen empfängt, bevor die Datensatznummer-Sucheinheit (106) das Abrufen der Datensatznummer beendet hat, und
die Zielposten-Abrufeinheit (107) aus der Suchzieltabelle (203) in der Datenbank (130) Daten des Abrufzielpostens (202) des durch die Datensatznummer bestimmten Datensatzes an dem durch die Ranginformationen angezeigten Rang abruft, wenn die Datensatznummer-Sucheinheit (106) die Datensatznummer bis zu dem durch die Ranginformationen angezeigten Rang abruft.

6. Suchvorrichtung nach einem der Ansprüche 1 bis 5, bei der die Zielposten-Abrufeinheit (107) einen vorgeschriebenen Posten aus dem Datensatz, der der Suchbedingung genügt, zu einer Zeit abruft, zu der die Datensatznummer-Sucheinheit (106) die Datensatznummer abruft.

7. Suchverfahren zum Suchen nach Daten in einer Datenbank, welches Suchverfahren aufweist:
einen Suchinformations-Aufnahmeschritt zum Aufnehmen von Suchinformationen, die einen Abrufzielposten (202), eine Suchzieltabelle (203) und eine Suchbedingung (204) anzeigen, durch eine Aufnahmevorrichtung;
einen Datensatznummer-Suchschritt durch eine Verarbeitungsvorrichtung, um einen Datensatz, der der durch die Suchinformationen angezeigten Suchbedingung (204) genügt, aus der durch die in dem Suchinformations-Aufnahmeschritt aufgenommenen Suchinformationen angezeigten Suchzieltabelle (203), wobei die Suchzieltabelle (203) eine Tabelle in der Datenbank (130) ist, und zum Abrufen einer Datensatznummer, die einen Datensatz in der Suchzieltabelle (203) eindeutig identifiziert, von dem gesuchten Datensatz, während die Datensatznummer einen Rang erhält;
einen Ranginformations-Aufnahmeschritt zum Aufnehmen von Ranginformationen, die einen vorgeschriebenen Rang anzeigen, durch die Aufnahmevorrichtung; und
einen Zielposten-Abrufschritt zum Abrufen, aus der Suchzieltabelle (203) in der Datenbank (130), von Daten des Abrufzielpostens (202) eines durch eine Datensatznummer bestimmten Datensatzes an einem durch die in dem Ranginformations-Aufnahmeschritt durch die Verarbeitungseinheit aufgenommenen Ranginformationen angezeigten Rang, wobei die Datensatznummer in dem Datensatznummer-Suchschritt abgerufen wird,
wobei,
wenn der Datensatznummer-Suchschritt das Abrufen der Datensatznummer beendet hat, der Zielposten-Abrufschritt aus der Suchzieltabelle (203) in der Datenbank (130) Daten des Abrufzielpostens (202) eines Datensatzes, der durch die Datensatznummer bestimmt ist, aufeinanderfolgend von einer Spitze eines Rangs, der durch den Datensatznummer-Suchschritt angewendet wird, abruft und die Daten in einer Speichervorrichtung (108) speichert,
**dadurch gekennzeichnet, dass**
wenn der Ranginformations-Aufnahmeschritt die Ranginformationen aufnimmt, während der Zielposten-Abrufschritt Daten des Abrufzielpostens (202) der Suchzieltabelle (203) aus der Suchzieltabelle (203) in der Datenbank (130) abruft und die Daten speichert, der Zielposten-Abrufschritt Daten des Abrufzielpostens (202) eines durch die Datensatznummer bestimmten Datensatzes aufeinanderfolgend von dem durch die Ranginformationen angezeigten Rang abruft.

8. Suchprogramm zum Suchen nach Daten in einer Datenbank (130), welches Suchprogramm einem Computer ermöglicht, auszuführen:
einen Suchinformations-Aufnahmeprozess zum Aufnehmen von Suchinformationen, die einen Abrufzielposten (202), eine Suchzieltabelle (203) und eine Suchbedingung (204) anzeigen;
einen Datensatznummer-Suchprozess zum Suchen nach einem Datensatz, der der durch die Suchinformationen angezeigten Suchbedingung (204) genügt, aus der durch die in dem Suchinformations-Aufnahmeprozess aufgenommenen Suchinformationen angezeigten Suchzieltabelle (203), wobei die Suchzieltabelle eine Tabelle in der Datenbank (130) ist, und zum Abrufen einer Datensatznummer, die einen Datensatz in der Suchzieltabelle (203) identifiziert, aus dem gesuchten Datensatz, während die Aufzeichnungsnummer einen Rang erhält;
einen Ranginformations-Aufnahmeprozess zum Aufnehmen von Ranginformationen, die einen vorgeschriebenen Rang anzeigen; und
einen Zielposten-Abrufprozess zum Abrufen von Daten des Abrufzielpostens (202) eines durch eine Datensatznummer bestimmten Datensatzes an einem durch die in dem Ranginformations-Aufnahmeprozess aufgenommenen Ranginformationen angezeigten Rang, welche Datensatznummer in dem Datensatznummer-Suchprozess abgerufen wird, wobei,
wenn der Datensatznummer-Suchprozess das Abrufen der Datensatznummer beendet hat, der Zielposten-Abrufprozess Daten des Abrufzielpostens (202) eines durch die Datensatznummer bestimmten Datensatzes aufeinanderfolgend von einer Spitze eines Rangs, der von dem Datensatznummer-Suchprozess angewendet wird, aus der Suchzieltabelle (203) in der Datenbank (130) abruft und die Daten in einer Speichervorrichtung (108) speichert,
**dadurch gekennzeichnet, dass**,
wenn der Ranginformations-Aufnahmeprozess die Ranginformationen aufnimmt, während der Zielposten-Abrufprozess Daten des Abrufzielpostens (202) der Suchzieltabelle (203) aus der Suchzieltabelle (203) in der Datenbank (130) abruft und die Daten in der Speichervorrichtung (108) speichert, der Zielposten-Abrufprozess Daten des Abrufzielpostens (202) eines durch die Datensatznummer bestimmten Datensatzes aufeinanderfolgend von dem durch die Ranginformationen angezeigten Rang an abruft.

## Revendications

1. Dispositif de recherche (100) destiné à rechercher des données dans une base de données (130), le dispositif de recherche (100) comprenant :
une unité d'entrée d'informations de recherche (102) destinée à entrer des informations de recherche qui indiquent un élément d'extraction cible (202), une table de recherche cible (203) et une condition de recherche (204) ;
une unité de recherche de numéro d'enregistrement (106) destinée à rechercher un enregistrement qui satisfait à la condition de recherche (204) indiquée par les informations de recherche à partir de la table de recherche cible (203) indiquée par les informations de recherche entrées par l'unité d'entrée d'informations de recherche (102), la table de recherche cible (203) étant une table dans la base de données (130), et à extraire un numéro d'enregistrement qui identifie de manière unique un enregistrement dans la table de recherche cible (203) à partir de l'enregistrement recherché tout en classant le numéro d'enregistrement ;
une unité d'entrée d'informations de classement (103) destinée à entrer des informations de classement qui indiquent un classement prescrit ; et
une unité d'extraction d'élément cible (107) destinée à extraire à partir de la table de recherche cible (203) dans la base de données (130), les données de l'élément d'extraction cible (202) d'un enregistrement spécifié par un numéro d'enregistrement à un classement indiqué par les informations de classement entrées par l'unité d'entrée d'informations de classement (103), le numéro d'enregistrement étant extrait par l'unité de recherche de numéro d'enregistrement (106), dans lequel :
lorsque l'unité de recherche de numéro d'enregistrement (106) termine l'extraction du numéro d'enregistrement, l'unité d'extraction d'élément cible (107) extrait, à partir de la table de recherche cible (203) dans la base de données (130), les données de l'élément d'extraction cible (202) d'un enregistrement spécifié par le numéro d'enregistrement de manière séquentielle à partir du haut d'un classement appliqué par l'unité de recherche de numéro d'enregistrement (106), et stocke les données dans un dispositif de stockage (108) ; **caractérisé en ce que** :
lorsque l'unité d'entrée d'informations de classement (103) entre les informations de classement tandis que l'unité d'extraction d'élément cible (107) extrait, à partir de la table de recherche cible (203) dans la base de données (130), les données de l'élément d'extraction cible (202) de la table de recherche cible (203) et stocke les données dans le dispositif de stockage (108), l'unité d'extraction d'élément cible (107) extrait les données de l'élément d'extraction cible (202) d'un enregistrement spécifié par le numéro d'enregistrement de manière séquentielle à partir du classement indiqué par les informations de classement.

2. Dispositif de recherche selon la revendication 1, dans lequel :
l'unité d'entrée d'informations de recherche (102) entre les informations de recherche selon une entrée en provenance d'une unité d'instruction de recherche prescrite (110) ; et
l'unité de recherche de numéro d'enregistrement (106) extrait les numéros d'enregistrement et compte le nombre d'enregistrements qui satisfont à la condition de recherche, et le dispositif de recherche (100) comprend en outre :
une unité de notification (104) destinée à notifier le nombre d'enregistrements comptés par l'unité de recherche de numéro d'enregistrement (106) à l'unité d'instruction de recherche prescrite (110).

3. Dispositif de recherche selon la revendication 1 ou la revendication 2, dans lequel :
l'unité d'extraction d'élément cible (107) extrait, à partir de la table de recherche cible (203) dans la base de données (130), les données de l'élément d'extraction cible (202) de l'enregistrement spécifié par le numéro d'enregistrement et stocke les données dans le dispositif de stockage (108), lorsque l'unité de recherche de numéro d'enregistrement (106) termine l'extraction du numéro d'enregistrement, et extrait les données de l'élément d'extraction cible (202) de l'enregistrement spécifié par le numéro d'enregistrement au classement indiqué par les informations de classement lorsque l'unité d'entrée d'informations de classement (103) entre les informations de classement.

4. Dispositif de recherche selon l'une quelconque des revendications 1 à 3, dans lequel :
l'unité d'extraction d'élément cible (107) extrait, à partir de la table de recherche cible (203) dans la base de données (130), les données de l'élément d'extraction cible (202) d'un enregistrement spécifié par le numéro d'enregistrement de manière séquentielle à partir du haut d'un classement appliqué par l'unité de recherche de numéro d'enregistrement (106), et stocke les données dans un dispositif de stockage (108), lorsque l'unité de recherche de numéro d'enregistrement (106) termine l'extraction du numéro d'enregistrement ; et
lorsque l'unité d'entrée d'informations de classement (103) entre les informations de classement tandis que l'unité d'extraction d'élément cible (107) extrait les données de l'élément d'extraction cible (202) de la table de recherche cible (203) et stocke les données dans le dispositif de stockage (108), mais lorsque les données de l'élément d'extraction cible (202) ont été déjà extraites à partir de l'enregistrement spécifié par le numéro d'enregistrement au classement indiqué par les informations de classement, l'unité d'extraction d'élément cible (107) poursuit un traitement consistant à extraire les données de l'élément d'extraction cible (202) de l'enregistrement spécifié par le numéro d'enregistrement de manière séquentielle à partir du haut, et à stocker les données dans le dispositif de stockage (108).

5. Dispositif de recherche selon l'une quelconque des revendications 1 à 4, dans lequel :
l'unité de recherche de numéro d'enregistrement (106) poursuit l'extraction du numéro d'enregistrement jusqu'au classement indiqué par les informations de classement lorsque l'unité d'entrée d'informations de classement (103) entre les informations de classement avant que l'unité de recherche de numéro d'enregistrement (106) termine l'extraction du numéro d'enregistrement ; et
l'unité d'extraction d'élément cible (107) extrait, à partir de la table de recherche cible (203) dans la base de données (130), les données de l'élément d'extraction cible (202) de l'enregistrement spécifié par le numéro d'enregistrement au classement indiqué par les informations de classement lorsque l'unité de recherche de numéro d'enregistrement (106) extrait le numéro d'enregistrement jusqu'au classement indiqué par les informations de classement.

6. Dispositif de recherche selon l'une quelconque des revendications 1 à 5, dans lequel :
l'unité d'extraction d'élément cible (107) extrait un élément prescrit à partir de l'enregistrement qui satisfait à la condition de recherche au moment où l'unité de recherche de numéro d'enregistrement (106) extrait le numéro d'enregistrement.

7. Procédé de recherche destiné à rechercher des données dans une base de données, le procédé de recherche comprenant :
une étape d'entrée d'informations de recherche (102) consistant à entrer des informations de recherche qui indiquent un élément de recherche cible (202), une table de recherche cible (203) et une condition de recherche (204), à l'aide d'un dispositif d'entrée ;
une étape de recherche de numéro d'enregistrement, à l'aide d'un dispositif de traitement, consistant à rechercher un enregistrement qui répond à la condition de recherche (204) indiquée par les informations de recherche à partir de la table de recherche cible (203) indiquée par les informations de recherche entrées dans l'étape d'entrée d'informations de recherche, la table de recherche cible (203) étant une table dans la base de données (130), et à extraire un numéro d'enregistrement qui identifie de manière unique un enregistrement dans la table de recherche cible (203) de l'enregistrement recherché tout en classant le numéro d'enregistrement ;
une étape d'entrée d'informations de classement consistant à entrer des informations de classement qui indiquent un classement prescrit par le dispositif d'entrée ; et
une étape d'extraction d'élément cible consistant à extraire, à partir de la table de recherche cible (203) dans la base de données (130), les données de l'élément d'extraction cible (202) d'un enregistrement spécifié par un numéro d'enregistrement à un classement indiqué par les informations de classement entrées durant l'étape d'entrée d'informations de classement réalisée par l'unité de traitement, le numéro d'enregistrement étant extrait durant l'étape de recherche de numéro d'enregistrement ;
dans lequel :
lorsque l'étape de recherche de numéro d'enregistrement termine l'extraction du numéro d'enregistrement, l'étape d'extraction d'élément cible extrait, à partir de la table de recherche cible (203) dans la base de données (130), les données de l'élément d'extraction cible (202) d'un enregistrement spécifié par le numéro d'enregistrement de manière séquentielle à partir du haut d'un classement appliqué par l'étape de recherche de numéro d'enregistrement, et stocke les données dans un dispositif de stockage (108) ; **caractérisé en ce que** :
lorsque l'étape d'entrée d'informations de classement entre les informations de classement tandis que l'étape d'extraction d'élément cible extrait, à partir de la table de recherche cible (203) dans la base de données (130), les données de l'élément d'extraction cible (202) de la table de recherche cible (203) et stocke les données, l'étape d'extraction d'élément cible extrait les données de l'élément d'extraction cible (202) d'un enregistrement spécifié par le numéro d'enregistrement de manière séquentielle à partir du classement indiqué par les informations de classement.

8. Programme de recherche destiné à rechercher des données dans une base de données (130), le programme de recherche permettant à un ordinateur d'exécuter :
un processus d'entrée d'informations de recherche consistant à entrer des informations de recherche qui indiquent un élément de recherche cible (202), une table de recherche cible (203) et une condition de recherche (204) ;
un processus de recherche de numéro d'enregistrement consistant à rechercher un enregistrement qui répond à la condition de recherche (204) indiquée par les informations de recherche à partir de la table de recherche cible (203) indiquée par les informations de recherche entrées dans le processus d'entrée d'informations de recherche, la table de recherche cible étant une table dans la base de données (130), et à extraire un numéro d'enregistrement qui identifie de manière unique un enregistrement dans la table de recherche cible (203) de l'enregistrement recherché tout en classant le numéro d'enregistrement ;
un processus d'entrée d'informations de classement consistant à entrer des informations de classement qui indiquent un classement prescrit ; et
un processus d'extraction d'élément cible consistant à extraire à partir de la table de recherche cible (203) dans la base de données (130), les données de l'élément d'extraction cible (202) d'un enregistrement spécifié par un numéro d'enregistrement à un classement indiqué par les informations de classement entrées dans le processus d'entrée d'informations de classement, le numéro d'enregistrement étant extrait dans le processus de recherche de numéro d'enregistrement, dans lequel :
lorsque le processus de recherche de numéro d'enregistrement termine l'extraction du numéro d'enregistrement, le processus d'extraction d'élément cible extrait, à partir de la table de recherche cible (203) dans la base de données (130), les données de l'élément d'extraction cible (202) d'un enregistrement spécifié par le numéro d'enregistrement de manière séquentielle à partir du haut d'un classement appliqué par le processus de recherche de numéro d'enregistrement, et stocke les données dans un dispositif de stockage (108) ; **caractérisé en ce que** :
lorsque le processus d'entrée d'informations de classement entre les informations de classement tandis que le processus d'extraction d'élément cible extrait, à partir de la table de recherche cible (203) dans la base de données (130), les données de l'élément d'extraction cible (202) de la table de recherche cible (203) et stocke les données dans le dispositif de stockage (108), le processus d'extraction d'élément cible extrait les données de l'élément d'extraction cible (202) d'un enregistrement spécifié par le numéro d'enregistrement de manière séquentielle à partir du classement indiqué par les informations de classement.
